# EUROPÄISCHE PATENTSCHRIFT

(11) **EP 4 603 305 B1**
(45) Veröffentlichungstag und Bekanntmachung des Hinweises auf die Patenterteilung: **09.12.2026**
(21) Anmeldenummer: 25156211.2
(22) Anmeldetag: 06.02.2025
(51) Int. Cl.: B60C 11/14, B60C 13/04

(54) **FAHRZEUGREIFEN**
VEHICLE TYRE
BANDAGE PNEUMATIQUE POUR VÉHICULES

(30) Priorität: 14.02.2024 DE 102024201312
(43) Veröffentlichungstag der Anmeldung: 20.08.2025
(73) Patentinhaber: Continental Reifen Deutschland GmbH, 30175 Hannover (DE)
(72) Erfinder: Römer, Justus, 30175 Hannover (DE); Funk-Friedek, Sascha, 30175 Hannover (DE); Dr. Strübel, Christian, 30175 Hannover (DE); Brüggemann, Carina, 30175 Hannover (DE); Dr. Menz, Rüdiger, 30175 Hannover (DE)
(74) Vertreter: Continental Corporation

(56) Entgegenhaltungen:
- US-A- 5 173 136
- US-A- 5 388 627
- US-A1- 2020 361 249
- US-A1- 2021 206 203

## Beschreibung

Die Erfindung betrifft einen Fahrzeugreifen mit einem profilierten Laufstreifen mit in Umfangsrichtung umlaufenden aus Profilstrukturelementen, wie Profilblöcken oder blockartigen Strukturelementen, bestehenden Profilblockreihen oder Profilrippen und mit Seitenwänden, wobei in den Profilstrukturelementen zumindest einer Profilblockreihe oder Profilrippe und/oder in zumindest einer Seitenwand Fasern enthalten sind, die zur Umfangsrichtung geneigt verlaufen.

Fahrzeugreifen, die im Laufstreifen oder in der Seitenwand zur Umfangsrichtung geneigt verlaufende Fasern enthalten, sind aus einer Vielzahl von Patentveröffentlichungen bekannt. Beispielsweise ist aus der EP 2 509 805 B1 bekannt, den Laufstreifen eines Reifens aus einem Verbundmaterial herzustellen, welches aus mehreren dünnen Schichten Gummi besteht, die jeweils Verstärkungskurzfasern aufweisen, die zueinander parallel sind und im Laufstreifen unidirektional gemäß einem von 0° verschiedenen Winkel mit einer zur Lauffläche senkrechten Richtung ausgerichtet sind. Von einer Gummischicht zur folgenden sind die Kurzfasern kreuzweise zueinander angeordnet. Bei dem aus der US 2021/206 203 A1 bekannten Reifen besteht der Laufstreifen aus Schichten eines Verbundmaterials, die eine Dicke von 1,00 mm bis 20,00 mm aufweisen und nebeneinander liegend parallel zu einer Ebene XZ ausgerichtet sind, wobei X die Laufrichtung des Reifens und Z die radiale Richtung ist. In diesen Schichten befinden sich parallel zur Ebene XZ Kurzfasern mit einer Länge von 0,50 mm bis 10,00 mm, die zur radialen Richtung unter einem Winkel α orientiert sind, welcher 45° +/- x beträgt, wobei x 10 bis 30 ist. Der Laufstreifen soll besonders verschleißfest sein, sodass Reifen mit einem derartigen Laufstreifen insbesondere Reifen für schwere Nutzfahrzeuge oder Tiefbaufahrzeuge sind. Aus der WO 2007/024804 A1 ist ein Fahrzeugluftreifen bekannt, bei welchem im Laufstreifen, in den Seitenwänden oder in den Wulstbereichen Kurzfasern enthalten sind, insbesondere Aramidfasern. Die Kurzfasern weisen eine Länge von 0,10 mm bis 8,00 mm, insbesondere von 0,70 mm bis 3,00 mm, auf. Die DE 69301385 T2 offenbart einen Radialreifen, dessen Seitenwände aus einer speziellen Gummizusammensetzung bestehen, deren Gummikomponente 40 bis 70 Gewichtsteile eines Butadiengummies und 30 bis 40 Gewichtsteile eines natürlichen Gummis und/oder eines Isoprengummis aufweist. Diese Gummizusammensetzung enthält ferner 10 bis 30 Gewichtsteile Kurzfasern, welche bis zu 90 % unter einem Winkel von +/- 20° zur Umfangsrichtung des Reifens ausgerichtet sind. Die Kurzfasern sind aus der Gruppe Nylon, Polyester, Aramid, Rayon oder Baumwolle ausgewählt.

Aus der US 5 388 627 A ist ein Fahrzeugreifen mit einem Laufstreifen und Seitenwänden bekannt, wobei die Seitenwände aus einem weicheren Gummimaterial als der Laufstreifen bestehen. Auf der Außenseite jeder Seitenwand befindet sich jeweils eine im Reifenquerschnitt die Messstelle der Reifenquerschnittsbreite passierende Schutzschicht aus einem in Umfangsrichtung orientierte Kurzfasern enthaltenden Gummimaterial mit einem komplexen Elastizitätsmodul von 50 kgf/cm² bis 450 kgf/cm² (Kilogrammkraft pro Quadratzentimeter). Die Schutzschicht weist eine Stärke von 2,00 mm bis 20,00 mm auf. Die Kurzfasern weisen einen Durchmesser von 1 µm bis 0,1 mm sowie eine Länge von 20 µm bis 2 mm auf und verlaufen zur Umfangsrichtung unter einem Winkel von 0° bis 20°. Durch die Schutzschicht soll die Schnittbeständigkeit der Seitenwand verbessert sein.

Aus der US 2020/0361249 A1 ist ein Fahrzeugluftreifen mit Seitenwänden bekannt, in deren radial äußeren Endabschnitten jeweils eine Verstärkungsschicht mit textilen Korden, beispielsweise mit Aramid-, Nylon-, Polyester oder Rayonkorden, verbaut ist, wodurch eine Fortpflanzung von etwaigen beim Fahren im Gummimaterial der Seitenwände auftretenden Rissen unterdrückt werden soll.

Die Seitenwände von Fahrzeugreifen, insbesondere von Fahrzeugluftreifen, sind von besonderer Bedeutung für die Übertragung von Antriebs- und Bremskräften auf die Straße bzw. den Untergrund. Je geringer die "Relativbewegung" zwischen der Kontaktfläche zum Untergrund bzw. zur Straße und der Felge ist, desto höher ist die Effizienz bei der Übertragung der Antriebs- bzw. Bremskräfte. Die Seitenwände sollen daher eine relativ hohe Umfangssteifigkeit aufweisen. Die Seitenwände sind jedoch auch für die Abplattung des Reifens verantwortlich und benötigen daher eine gewisse Flexibilität in axialer (nach außen weisender) Richtung. Eine geringe Hysterese des Gummimaterials der Seitenwände ist zudem von Vorteil, um möglichst wenig Rollwiderstand zu erzeugen. Es besteht daher ein Zielkonflikt zwischen einer möglichst hohen Umfangssteifigkeit mit einer damit einhergehenden hohen Effizienz der eingesetzten Antriebsenergie und der gewünschten Flexibilität für das Abplatten und einen geringen Rollwiderstand. Insbesondere bei Kraftfahrzeugen mit einem elektrischen Antrieb ist dieser Zielkonflikt von Bedeutung, da solche Fahrzeuge eine höhere Effizienz in der Übertragung von Antriebsenergie vom Fahrzeug auf die Straße besitzen.

Was den Laufstreifen eines Fahrzeugreifens betrifft, ist es für eine gute Haftung des Reifens auf dem Untergrund von Vorteil, wenn der Laufstreifen eine gewisse Flexibilität aufweist, um sich dem Untergrund bzw. der Straßenoberfläche gut anzupassen und um eine möglichst hohe Kontaktfläche zu ermöglichen. Diese erwünschte "Flexibilität" hat jedoch den Nachteil, dass die Antriebskraft, die über das Drehmoment vom Fahrzeug auf die Straße übertragen wird, mit einem Verlust einhergeht. Diesbezüglich besteht auch beim Laufstreifen ein Zielkonflikt.

Der Erfindung liegt die Aufgabe zugrunde, die erwähnten Zielkonflikte zwischen der Effizienz der eingesetzten Antriebsenergie und der gewünschten Flexibilität für ein optimales Abplatten des Reifens besser als bisher zu lösen.

Gelöst wird die gestellte Aufgabe erfindungsgemäß dadurch, dass im Laufstreifen Fasern enthaltende Profilstrukturelemente vorhanden sind, in welchen jeweils sämtliche Fasern bei einer gleichsinnigen Neigung zur einen Umfangsrichtung in Schnittebenen parallel zur Reifenäquatorialebene zur radialen Richtung geneigt sind, und Fasern enthaltende Profilstrukturelemente vorhanden sind, in welchen jeweils sämtliche Fasern bei einer gleichsinnigen Neigung zur entgegengesetzten Umfangsrichtung in Schnittebenen parallel zur Reifenäquatorialebene zur radialen Richtung ebenfalls geneigt sind und/oder dass die Seitenwand zwei aufeinander angeordnete, äußere Gummischichten enthält, wobei in der einen Gummischicht sämtliche Fasern zur einen Umfangsrichtung gleichsinnig geneigt sind und in der zweiten Gummischicht sämtliche Fasern zur zweiten Umfangsrichtung ebenfalls gleichsinnig geneigt sind.

Die Erfindung ermöglicht es, im Laufstreifen und/oder in den Seitenwänden den Zielkonflikt zwischen der erwähnten Flexibilität und der Effizienz der Übertragung der Antriebs- und Bremskraft zu lösen. In der Seitenwand bieten die ausgerichteten Fasern eine höhere Steifigkeit der Gummicompounds bei im wesentlichen neutralem Rollwiderstandsverhalten. Je nach der Neigung der Fasern relativ zur Umfangsrichtung und der Größe ihrer Neigungswinkel relativ zur radialen Richtung können sie beim Beschleunigen oder beim Bremsen eine größere oder kleinere versteifende Wirkung entfalten. Im Laufstreifen ist ein ähnlicher bzw. analoger Effekt erzielbar, da die Fasern die Kraftübertragung vom Fahrzeug auf die Straße verbessern und gleichzeitig die Anpassungsfähigkeit des Laufstreifencompounds auf die Straße kaum bzw. nicht beeinflussen. So ist vor allem die Verformung des Laufstreifens in radialer Richtung und daher die Anpassung des Laufstreifens an die Straße bzw. den Untergrund weiterhin sichergestellt, da die Fasern auf Druck belastet keine Steifigkeitserhöhung bewirken. Die Umfangssteifigkeit in und entgegen der Abrollrichtung ist vergrößert. da die Fasern beim Bremsen und bei Beschleunigung auf Zug belastet sind und eine höhere Steifigkeit des Laufstreifens bewirken.

Bei einer bevorzugten Ausführung sind die Fasern in den Profilstrukturelementen des Laufstreifens zur radialen Richtung unter einem Winkel von 20° bis 70° geneigt. Des Weiteren ist es bevorzugt, wenn die Fasern in den Gummischichten der Seitenwand zur jeweiligen Umfangsrichtung ebenfalls unter einem Winkel von 20° bis 70° verlaufen. Der Neigungswinkel der Fasern befindet sich daher in einem Bereich, welcher es gestattet, eine besondere Effizienz der Übertragung von Antriebs- und Bremskräften und eine höhere Flexibilität bzw. Verformbarkeit des Laufstreifens und/oder der Seitenwände zu erzielen.

Bevorzugt betragen die Winkel, unter welchen die Fasern im Laufstreifen relativ zur radialen Richtung geneigt sind und in den Gummischichten der Seitenwand der jeweiligen Umfangsrichtung geneigt sind 30° bis 60°, insbesondere 40° bis 50°. Besonders ausgewogen ist ein Reifen hinsichtlich der Flexibilität und der Effizienz der Kraftübertragung, wenn diese Winkel 45° betragen. Dabei verlaufen bei einer bevorzugten Ausführung in den Profilstrukturelementen des Laufstreifens zumindest 90 % der enthaltenen Fasern und in den Gummischichten der Seitenwand zumindest 80 % der enthaltenen Fasern unter einem bestimmten Winkel.

Von besonderem Vorteil sind Ausführungen, bei welchen die Fasern in den Profilstrukturelementen des Laufstreifens entweder Kurzfasern mit einer Länge von 0,50 mm bis 5,00 mm oder Langfasern mit einer Länge von 3,00 mm bis 10,00 mm sind, wobei die Langfasern zu zumindest 50 % eine Länge größer 6,00 mm aufweisen. Analoges gilt für die Fasern in den Gummischichten der Seitenwand, die entweder Kurzfasern mit einer Länge von 0,50 mm bis 5,00 mm oder Langfasern mit einer Länge von 3,00 mm bis 50,00 mm sind, wobei die Langfasern zu zumindest 50 % eine Länge größer 15,00 mm aufweisen. Sowohl die Profilstrukturelemente im Laufstreifen als auch die Gummischichten in der Seitenwand können daher Kurzfasern oder Langfasern enthalten. Von besonderem Vorteil ist es, wenn sowohl Kurzfasern als auch Langfasern jeweils möglichst gleich lang sind oder sich nur geringfügig in ihren Längen unterscheiden. Bevorzugte Bereiche für die Länge der Kurzfasern sind 1,00 mm bis 4,00 mm, insbesondere 1,50 mm bis 3,00 mm.

Besonders ausgewogen hinsichtlich Flexibilität und Effizienz der Kraftübertragung zur Straße sind Ausführungen, bei welchen im Laufstreifen die in einer Profilblockreihe oder einer Profilrippe in aufeinanderfolgenden Profilstrukturelementen befindlichen Fasern abwechselnd zur einen Umfangsrichtung weisend geneigt sind und entsprechende, insbesondere möglichst gleich große Winkel mit der radialen Richtung einschließen.

Bei einer alternativen Ausführung sind die im Laufstreifen in zumindest einer Profilblockreihe oder einer Profilrippe in deren Profilstrukturelementen befindlichen Fasern sämtlich, also über den gesamten Umfang des Laufstreifens, in eine bestimmte Umfangsrichtung und zur radialen Richtung unter gleichen Winkeln geneigt, wobei in zumindest einer weiteren Profilblockreihe oder Profilrippe die in deren Profilstrukturelementen befindlichen Fasern sämtlich in die andere Umfangsrichtung und zur radialen Richtung ebenfalls unter gleichen Winkeln geneigt sind.

Insbesondere bezüglich des Einflusses der Fasern auf die Steifigkeit der Seitenwand bzw. des Laufstreifens ist es vorteilhaft, wenn die Fasern einen Durchmesser von 0,20 mm bis 1,00 mm, insbesondere von 0,30 mm bis 0,80 mm, bevorzugt von 0,40 mm bis 0,60 mm, aufweisen.

Besonders gut geeignet für die Verstärkung von Seitenwänden und Laufstreifen sind Kohlefasern, Glasfasern oder Polyamidfasern.

Der Anteil an Fasern im jeweiligen Gummimaterial beträgt 1 phr bis 10 phr, insbesondere 1,5 phr bis 8 phr, vorzugsweise 2 phr bis 5 phr.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Schrägansicht eines Fahrzeugluftreifens mit einer Ausführungsvariante der Erfindung,
Fig. 2 einen Querschnitt eines radialen Abschnitts einer Seitenwand des Fahrzeugluftreifens gemäß Fig. 1 und
Fig. 3 eine Schnittdarstellung eines Umfangsabschnitts des Laufstreifens gemäß der Linie III-III der Fig. 1.

Gemäß der Erfindung ausgeführte Fahrzeugreifen sind insbesondere Reifen für Personenkraftwagen, Vans, Transporter, SUVs, Light-Trucks oder Nutzfahrzeugfahrzeuge und vorzugsweise Fahrzeugluftreifen in Radialbauart.

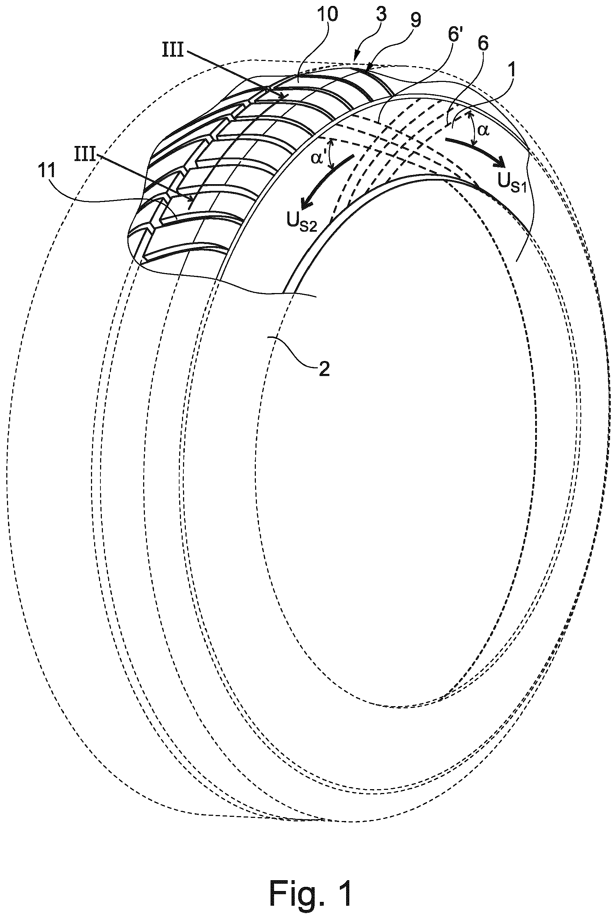

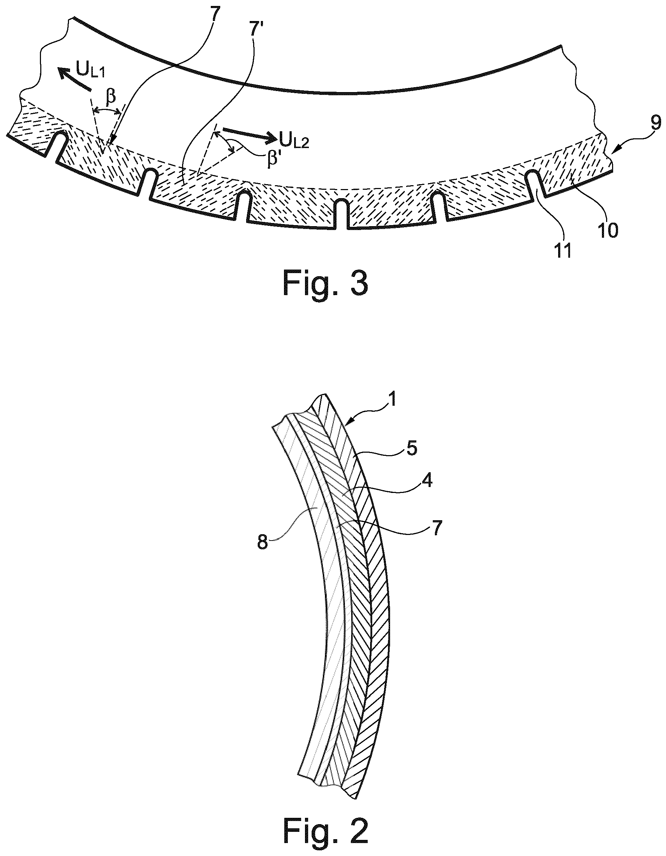

Der in Fig. 1 beispielhaft in Schrägansicht dargestellte Fahrzeugreifen ist ein Fahrzeugluftreifen für Personenkraftwagen. Der Fahrzeugreifen weist Seitenwände 1, Wulstbereiche 2 und einen profilierten Laufstreifen 3 auf. Die Seitenwand 1 weist über ihren Umfang zwei aufeinander positionierte Gummischichten 4, 5 auf, wobei, wie Fig. 2 zeigt, die Gummischicht 5 die an der Außenseite der Seitenwand 1 befindliche Gummischicht ist. Die Gummischichten 4, 5 bestehen aus Gummimaterialien, die übereinstimmen oder voneinander verschieden sind und enthalten über ihren gesamten Umfang gleichmäßig verteilte ausgerichtete Fasern 6, 6' (Fig. 1). In Fig. 1 sind Fasern 6, 6' lediglich in einem Umfangsabschnitt angedeutet. Der in Fig. 2 dargestellte Querschnitt durch einen Abschnitt der Seitenwand 1 zeigt diese beiden Gummischichten 4, 5 und vom weiteren Aufbau des Fahrzeugreifens den innenseitig der inneren Gummischicht 4 verlaufenden Abschnitt einer Karkasseinlage 7 und den innenseitig der Karkasseinlage 7 anschließenden Abschnitt einer aus einem Gummimaterial bestehenden Innenschicht 8. In der radial äußeren, die Außenseite der Seitenwand 1 aufweisenden Gummischicht 5 befinden sich die Fasern 6 (Fig. 1), die zur einen Umfangsrichtung U_{S1} des Reifens bzw. der Seitenwand 1 unter einem Winkel α von 20° bis 70°, insbesondere von 30° bis 60° und bevorzugt von 40° bis 50° verlaufen. In der weiter innen befindlichen Gummischicht 4 sind die Fasern 6' (Fig. 1) enthalten, die unter einem Winkel α` analog zum Winkel α, jedoch in die andere Umfangsrichtung U_{S2} geneigt, verlaufen. Es verlaufen jeweils zumindest 90 % der Fasern 6, 6' unter einem bestimmten Winkel innerhalb der angegebenen Winkelbereiche, wobei bei der bevorzugten Ausführung die Winkelung der Fasern 6, 6' übereinstimmt. Das heißt, wenn beispielsweise in der äußeren Gummischicht 5 die Fasern 6 zu zumindest 90 % unter einem Winkel α von 45° geneigt sind, sind auch in der Gummischicht 4 die Fasern 6' zu zumindest 90 % unter einem Winkel α' von 45° geneigt.

Fig. 3 zeigt einen Schnitt entlang der Linie III-III der Fig. 1, demnach durch einen Umfangsabschnitt einer Profilblockreihe 9 im profilierten Bereich des Laufstreifens 3, wobei sich die Profilierung des Laufstreifens 3 in der radial äußersten Gummischicht, der Laufstreifencap, des Laufstreifens befindet. Die Profilblockreihe 9 besteht in Umfangsrichtung aus aufeinanderfolgenden Profilblöcken 10, die durch Querrillen 11 voneinander getrennt sind. Bei einer alternativen Ausführung befindet sich im Laufstreifen 3 zumindest eine in Umfangsrichtung umlaufende Profilrippe, die durch beispielsweise innerhalb der Profilrippe endende Querrillen, Einschnitte und dergleichen profilblockartig strukturiert ist.

Sämtliche Profilblöcke 10 bestehen aus dem gleichen Gummimaterial. In Umfangsrichtung aufeinanderfolgende Profilblöcke 10 enthalten jedoch in ihrem Gummimaterial abwechselnd Fasern 7, 7', die, wie es Fig. 3 zeigt, bezüglich der Umfangsrichtung des Laufstreifens 3 gegensinnig zueinander geneigt sind und gleichzeitig in Schnittebenen parallel zur Reifenäquatorialebene zur radialen Richtung geneigt sind. Es wechselt daher in der Profilblockreihe 9 jeweils ein Profilblock 10 mit Fasern 7, die zur Umfangsrichtung U_{L1} weisend zur radialen Richtung und unter einem Winkel β geneigt sind, mit einem Profilblock 10 ab, in welchem die Fasern 7' unter einem Winkel β' zur radialen Richtung und gleichzeitig in die entgegengesetzte Umfangsrichtung U_{L2} geneigt sind. Die Winkel β, β' bewegen sich in einem Bereich von 20° bis 70°, insbesondere von 30° bis 60° und bevorzugt von 40° bis 50°. Auch in den Profilblöcken 10 verlaufen jeweils zumindest 90 % der Fasern 7, 7' unter einem bestimmten Winkel β, β' aus dem Winkelbereich von 20° bis 70°. Bei einer bevorzugten Ausführung weisen die Profilblöcke 10 jeweils Fasern 7, 7' auf, deren Winkel β, β' gleich groß sind. Die Ausgestaltung bzw. Anordnung der Fasern 7, 7' kann ferner derart sein, dass die Fasern 7 unter einem Winkel β zur radialen Richtung geneigt verlaufen, welcher sich vom Winkel β' der Fasern 7' unterscheidet.

Die Fasern 6, 6' sowie die Fasern 7, 7' sind im jeweiligen Gummimaterial gleichmäßig bzw. im Wesentlichen gleichmäßig verteilte Kurzfasern oder Langfasern. Kurzfasern weisen eine Länge von 0,50 mm bis 5,00 mm, insbesondere 1,00 mm bis 4,00 mm und bevorzugt von 1,50 mm bis 3,00 mm auf. Langfasern im Gummimaterial von Profilblockreihen oder Profilrippen im Laufstreifen weisen eine Länge von 3,00 mm bis 10,00 mm auf, wobei die Langfasern zu zumindest 50% eine Länge größer 6,00 mm aufweisen. Langfasern in den Gummischichten 4, 5 in Seitenwänden 1 weisen eine Länge von 3,00 mm bis 50,00 mm auf, wobei die Langfasern zu zumindest 50% eine Länge größer 15,00 mm aufweisen.

Sowohl die Kurzfasern als auch die Langfasern besitzen einen Durchmesser von 0,20 mm bis 1,00 mm, insbesondere von 0,30 mm bis 0,80 mm und bevorzugt von 0,40 mm bis 0,60 mm. Die Fasern 6, 6', 7, 7' sind insbesondere Kohlefasern, Glasfasern oder Polyamidfasern.

Es können Fasern unterschiedlicher Materialien in den Gummischichten 4, 5 in den Seitenwänden 1 und in den aufeinanderfolgenden Profilblöcken 10 einer Profilblockreihe bzw. in den aufeinanderfolgenden profilblockartigen Strukturen einer Profilrippe eingebracht sein. In den Seitenwänden 1 können in der einen Gummischicht 4, 5 Langfasern und in der anderen Gummischicht 4, 5 Kurzfasern enthalten sein. Der Anteil an Fasern 6, 6' und 7, 7' im jeweiligen Gummimaterial beträgt 1 phr bis 10 phr, insbesondere 1,5 phr bis 8 phr, vorzugsweise 2 phr bis 5 phr.

Bei einer bevorzugten Ausführung befinden sich ferner in den Profilblöcken oder profilblockartigen Strukturen gleichartige Fasern, also beispielsweise Kurzfasern aus einem bestimmten Längen- und Durchmesserbereich und mit aufeinander abgestimmter gegensinniger Orientierung. Bei alternativen Ausführungen wechselt in aufeinanderfolgenden Profilblöcken oder profilblockartigen Strukturen jeweils ein Profilblock bzw. eine profilblockartige Struktur mit Kurzfasern mit einem Profilblock bzw. einer profilblockartigen Struktur ab, in welchem bzw. in welcher Langfasern enthalten sind.

Bei einer alternativen, nicht dargestellten Ausführung sind innerhalb zumindest einer in Umfangsrichtung umlaufenden Profilblockreihe bzw. Profilrippe ausschließlich Fasern 6 vorhanden, die sämtlich in die eine Umfangsrichtung U_{L1} oder U_{L2} des Reifens ausgerichtet sind, wobei in zumindest einer weiteren Profilblockreihe oder Profilrippe ausschließlich Fasern 6' enthalten sind, die bezüglich der anderen Umfangsrichtung U_{L1} oder U_{L2} und daher gegensinnig zu den Fasern 6 geneigt enthalten sind.

In den Gummischichten 4, 5 in den der Seitenwänden 1 ist es möglich, eine weitgehend gleichmäßige Verteilung der jeweils verwendeten Fasern 6, 6' vorzusehen. Im Laufstreifen in den in Umfangsrichtung aufeinanderfolgenden Profilblöcken 10 oder profilblockartigen Strukturen erfolgt während der Vulkanisation des Reifens in einer Vulkanisationsform durch das Einpressen von Formelementen, welche Querrillen oder Einschnitte ausformen, eine gewisse Verschiebung und stellenweise Konzentrierung von Fasern im Gummimaterial des fertig vulkanisierenden Reifens.

### Bezugszeichenliste

- 1: Seitenwand
- 2: Wulstbereich
- 3: Laufstreifen
- 4, 5: Gummischicht
- 6, 6': Fasern
- 7, 7': Fasern
- 7: Karkasseinlage
- 8: Innenschicht
- 9: Profilblockreihe
- 10: Profilblock
- 11: Querrille
- α, α': Winkel
- β, β': Winkel
- U_{S1}, U_{S2}: Umfangsrichtung (Seitenwand)
- U_{L1}, U_{L2}: Umfangsrichtung (Laufstreifen)

## Patentansprüche

1. Fahrzeugreifen mit einem profilierten Laufstreifen (3) mit in Umfangsrichtung umlaufenden aus Profilstrukturelementen, wie Profilblöcken (10) oder blockartigen Strukturelementen, bestehenden Profilblockreihen (9) oder Profilrippen und mit Seitenwänden (1), wobei in den Profilstrukturelementen zumindest einer Profilblockreihe (9) oder Profilrippe und/oder in zumindest einer Seitenwand (1) Fasern (6, 6', 7, 7') enthalten sind, die zur Umfangsrichtung geneigt verlaufen,
**dadurch gekennzeichnet,**
**dass** im Laufstreifen (3) Fasern (7) enthaltende Profilstrukturelemente vorhanden sind, in welchen jeweils sämtliche Fasern (7) bei einer gleichsinnigen Neigung zur einen Umfangsrichtung (U_{L1}) in Schnittebenen parallel zur Reifenäquatorialebene zur radialen Richtung geneigt sind, und Fasern (7') enthaltende Profilstrukturelemente vorhanden sind, in welchen jeweils sämtliche Fasern (7') bei einer gleichsinnigen Neigung zur entgegengesetzten Umfangsrichtung (U_{L2}) in Schnittebenen parallel zur Reifenäquatorialebene zur radialen Richtung ebenfalls geneigt sind
und/oder dass die Seitenwand (1) zwei aufeinander angeordnete, äußere Gummischichten (4, 5) enthält, wobei in der einen Gummischicht (4) sämtliche Fasern (6') zur einen Umfangsrichtung (U_{S2}) gleichsinnig geneigt sind und in der zweiten Gummischicht (5) sämtliche Fasern (6) zur zweiten Umfangsrichtung (U_{S1}) ebenfalls gleichsinnig geneigt sind.

2. Fahrzeugreifen nach Anspruch 1, **dadurch gekennzeichnet, dass** die Fasern (7, 7') in den Profilstrukturelementen zur radialen Richtung unter einem Winkel (β, β') von 20° bis 70° geneigt sind.

3. Fahrzeugreifen nach Anspruch 1, **dadurch gekennzeichnet, dass** die Fasern (6, 6') in den Gummischichten (4, 5) der Seitenwand (1) zur jeweiligen Umfangsrichtung (U_{S1}, U_{S2}) unter einem Winkel (α, α') von 20° bis 70° verlaufen.

4. Fahrzeugreifen nach Anspruch 2 oder 3, **dadurch gekennzeichnet, dass** die Winkel (α, α', β, β') 30° bis 60°, bevorzugt 40° bis 50°, betragen.

5. Fahrzeugreifen nach einem der Ansprüche 1 bis 4, **dadurch gekennzeichnet, dass** in den Profilstrukturelementen des Laufstreifens (3) zumindest 90 % der enthaltenen Fasern (7, 7') unter einem bestimmten Winkel verlaufen.

6. Fahrzeugreifen nach einem der Ansprüche 1 bis 5, **dadurch gekennzeichnet, dass** in den Gummischichten (4, 5) der Seitenwand (1) zumindest 80 % der enthaltenen Fasern (6, 6') unter einem bestimmten Winkel verlaufen.

7. Fahrzeugreifen nach einem der Ansprüche 1 bis 6, **dadurch gekennzeichnet, dass** die Fasern (7, 7') in den Profilstrukturelementen des Laufstreifens (3) entweder Kurzfasern mit einer Länge von 0,50 mm bis 5,00 mm oder Langfasern mit einer Länge von 3,00 mm bis 10,00 mm sind, wobei die Langfasern zu zumindest 50% eine Länge größer 6,00 mm aufweisen.

8. Fahrzeugreifen nach einem der Ansprüche 1 bis 7, **dadurch gekennzeichnet, dass** die Fasern (6, 6') in den Gummischichten (4, 5) der Seitenwand (1) entweder Kurzfasern mit einer Länge von 0,50 mm bis 5,00 mm oder Langfasern mit einer Länge von 3,00 mm bis 50,00 mm sind, wobei die Langfasern zu zumindest 50% eine Länge größer 15,00 mm aufweisen.

9. Fahrzeugreifen nach Anspruch 7 oder 8, **dadurch gekennzeichnet, dass** die Kurzfasern eine Länge von 1,00 mm bis 4,00 mm, bevorzugt von 1,50 mm bis 3,00 mm, aufweisen.

10. Fahrzeugreifen nach einem der Ansprüche 1 bis 9, **dadurch gekennzeichnet, dass** im Laufstreifen (3) die in einer Profilblockreihe (9) oder einer Profilrippe in aufeinander folgenden Profilstrukturelementen enthaltenen Fasern (7, 7') abwechselnd zur einen und zur anderen Umfangsrichtung (U_{L1}, U_{L2}) weisend geneigt sind.

11. Fahrzeugreifen nach einem der Ansprüche 1 bis 9, **dadurch gekennzeichnet, dass** im Laufstreifen in zumindest einer Profilblockreihe oder einer Profilrippe die in deren Profilstrukturelementen befindlichen Fasern sämtlich, also über den gesamten Umfang des Laufstreifens, in eine bestimmte Umfangsrichtung und zur radialen Richtung unter gleichen Winkeln geneigt sind, wobei in zumindest einer weiteren Profilblockreihe oder Profilrippe die in deren Profilstrukturelementen befindlichen Fasern sämtlich in die andere Umfangsrichtung und zur radialen Richtung ebenfalls unter gleichen Winkeln geneigt sind.

12. Fahrzeugreifen nach einem der Ansprüche 1 bis 11, **dadurch gekennzeichnet, dass** die Fasern (6, 6', 7, 7') einen Durchmesser von 0,20 mm bis 1,00 mm, insbesondere von 0,30 mm bis 0,80 mm, bevorzugt von 0,40 mm bis 0,60 mm, aufweisen.

13. Fahrzeugreifen nach einem der Ansprüche 1 bis 12, **dadurch gekennzeichnet, dass** die Fasern (6, 6', 7, 7') Kohlefasern, Glasfasern oder Polyamidfasern sind.

14. Fahrzeugreifen nach einem der Ansprüche 1 bis 13, **dadurch gekennzeichnet, dass** der Anteil an Fasern (6, 6', 7, 7') im jeweiligen Gummimaterial 1 phr bis 10 phr, insbesondere 1,5 phr bis 8 phr, vorzugsweise 2 phr bis 5 phr, beträgt.

## Claims

1. Vehicle tyre having a profiled tread (3) with profile block rows (9) or profile ribs encircling in the circumferential direction and consisting of profile structure elements, such as profile blocks (10) or block-like structure elements, and with sidewalls (1), wherein the profile structure elements of at least one profile block row (9) or profile rib and/or at least one sidewall (1) contain fibres (6, 6', 7, 7') which run at an inclination to the circumferential direction,
**characterized**
**in that**, in the tread (3), there are profile structure elements which contain fibres (7) and in which, with an inclination in the same direction in relation to the one circumferential direction (U_{L1}), all the fibres (7) are each inclined in relation to the radial direction in sectional planes parallel to the equatorial plane of the tyre, and there are profile structure elements which contain fibres (7') and in which, with an inclination in the same direction in relation to the opposite circumferential direction (U_{L2}), all the fibres (7') are likewise each inclined in relation to the radial direction in sectional planes parallel to the equatorial plane of the tyre.
and/or in that the sidewall (1) contains two outer rubber layers (4, 5) arranged one on top of the other, wherein all the fibres (6') in the one rubber layer (4) are inclined in the same direction in relation to the one circumferential direction (U_{S2}), and all the fibres (6) in the second rubber layer (5) are likewise inclined in the same direction in relation to the second circumferential direction (U_{S1}).

2. Vehicle tyre according to Claim 1, **characterized in that** the fibres (7, 7') in the profile structure elements are inclined at an angle (β, β') of 20° to 70° with respect to the radial direction.

3. Vehicle tyre according to Claim 1, **characterized in that** the fibres (6, 6') in the rubber layers (4, 5) of the sidewall (1) run at an angle (α, α') of 20° to 70° with respect to the respective circumferential direction (U_{S1}, U_{S2}).

4. Vehicle tyre according to Claim 2 or 3, **characterized in that** the angles (α, α', β, β') are 30° to 60°, preferably 40° to 50°.

5. Vehicle tyre according to one of Claims 1 to 4, **characterized in that** at least 90% of the fibres (7, 7') present run at a certain angle in the profile structure elements of the tread (3).

6. Vehicle tyre according to one of Claims 1 to 5, **characterized in that** at least 80% of the fibres (6, 6') present run at a certain angle in the rubber layers (4, 5) of the sidewall (1).

7. Vehicle tyre according to one of Claims 1 to 6, **characterized in that** the fibres (7, 7') in the profile structure elements of the tread (3) are either short fibres having a length of 0.50 mm to 5.00 mm or long fibres having a length of 3.00 mm to 10.00 mm, wherein at least 50% of the long fibres have a length greater than 6.00 mm.

8. Vehicle tyre according to one of Claims 1 to 7, **characterized in that** the fibres (6, 6') in the rubber layers (4, 5) of the sidewall (1) are either short fibres having a length of 0.50 mm to 5.00 mm or long fibres having a length of 3.00 mm to 50.00 mm, wherein at least 50% of the long fibres have a length greater than 15.00 mm.

9. Vehicle tyre according to Claim 7 or 8, **characterized in that** the short fibres have a length of 1.00 mm to 4.00 mm, preferably of 1.50 mm to 3.00 mm.

10. Vehicle tyre according to one of Claims 1 to 9, **characterized in that**, in the tread (3), the fibres (7, 7') contained in a profile block row (9) or a profile rib in successive profile structure elements are inclined in an alternating manner pointing towards one and towards the other circumferential direction (U_{L1}, U_{L2}).

11. Vehicle tyre according to one of Claims 1 to 9, **characterized in that**, in the tread, in at least one profile block row or a profile rib, the fibres located in the profile structure elements thereof are all inclined, that is to say over the entire circumference of the tread, in a certain circumferential direction and at equal angles to the radial direction, wherein, in at least one further profile block row or profile rib, the fibres located in the profile structure elements thereof are all inclined in the other circumferential direction and likewise at equal angles to the radial direction.

12. Vehicle tyre according to one of Claims 1 to 11, **characterized in that** the fibres (6, 6', 7, 7') have a diameter of 0.20 mm to 1.00 mm, in particular of 0.30 mm to 0.80 mm, preferably of 0.40 mm to 0.60 mm.

13. Vehicle tyre according to one of Claims 1 to 12, **characterized in that** the fibres (6, 6', 7, 7') are carbon fibres, glass fibres or polyamide fibres.

14. Vehicle tyre according to one of Claims 1 to 13, **characterized in that** the proportion of fibres (6, 6', 7, 7') in the respective rubber material is 1 phr to 10 phr, in particular 1.5 phr to 8 phr, preferably 2 phr to 5 phr.

## Revendications

1. Pneumatique pour véhicule présentant une bande de roulement profilée (3) pourvue de rangées de blocs profilés (9) ou de nervures profilées, circonférentielles dans la direction circonférentielle, constituées par des éléments structurels profilés, tels que des blocs profilés (10) ou des éléments structurels de type bloc, et pourvue de flancs latéraux (1), au moins une rangée de blocs profilés (9) ou nervure profilée étant contenue dans les élément structurels profilés et/ou des fibres (6, 6', 7, 7') étant contenues dans au moins un flanc latéral (1), qui sont inclinées par rapport à la direction circonférentielle,
**caractérisé**
**en ce que**, dans la bande de roulement (3), des éléments structurels profilés contenant des fibres (7) sont présents, dans lesquels éléments respectivement toutes les fibres (7), à une inclinaison dans le même sens par rapport à un sens circonférentiel (U_{L1}) dans les plans de coupe parallèlement au plan équatorial du pneu, sont inclinées par rapport à la direction radiale, et des éléments structurels profilés contenant des fibres (7') sont présents, dans lesquels éléments respectivement toutes les fibres (7'), à une inclinaison dans le même sens par rapport au sens circonférentiel opposé (U_{L2}) dans des plans de coupe parallèlement au plan équatorial du pneu, sont également inclinées par rapport à la direction radiale
et/ou en ce que le flanc latéral (1) contient deux couches de caoutchouc (4, 5) externes agencées l'une sur l'autre, toutes les fibres (6') dans l'une couche de caoutchouc (4) étant inclinées dans le même sens par rapport à un sens circonférentiel (U_{S2}) et toutes les fibres (6) dans la seconde couche de caoutchouc (5) étant également inclinées dans le même sens par rapport au second sens périphérique (U_{S1}).

2. Pneumatique pour véhicule selon la revendication 1, **caractérisé en ce que** les fibres (7, 7') dans les éléments structurels profilés sont inclinées, par rapport à la direction radiale, selon un angle (β, β') de 20° à 70°.

3. Pneumatique pour véhicule selon la revendication 1, **caractérisé en ce que** les fibres (6, 6') dans les couches de caoutchouc (4, 5) du flanc latéral (1) s'étendent, par rapport au sens circonférentiel (U_{S1}, U_{S2}) respectif, selon un angle (α, α') de 20° à 70°.

4. Pneumatique pour véhicule selon la revendication 2 ou 3, **caractérisé en ce que** les angles (α, α', β, β') représentent 30° à 60°, de préférence 40° à 50°.

5. Pneumatique pour véhicule selon l'une des revendications 1 à 4, **caractérisé en ce que**, dans les éléments structurels profilés de la bande de roulement (3), au moins 90% des fibres (7, 7') contenues s'étendent selon un angle défini.

6. Pneumatique pour véhicule selon l'une des revendications 1 à 5, **caractérisé en ce que**, dans les couches de caoutchouc (4, 5) du flanc latéral (1), au moins 80% des fibres (6, 6') contenues s'étendent selon un angle défini.

7. Pneumatique de véhicule selon l'une des revendications 1 à 6, **caractérisé en ce que** les fibres (7, 7') dans les éléments structurels profilés de la bande de roulement (3) sont soit des fibres courtes d'une longueur de 0,50 mm à 5,00 mm, soit des fibres longues d'une longueur de 3,00 mm à 10,00 mm, les fibres longues présentant, à raison d'au moins 50%, une longueur supérieure à 6,00 mm.

8. Pneumatique de véhicule selon l'une des revendications 1 à 7, **caractérisé en ce que** les fibres (6, 6') dans les couches de caoutchouc (4, 5) de la paroi latérale (1) sont soit des fibres courtes d'une longueur de 0,50 mm à 5,00 mm, soit des fibres longues d'une longueur de 3,00 mm à 50,00 mm, les fibres longues présentant, à raison d'au moins 50%, une longueur supérieure à 15,00 mm.

9. Pneumatique pour véhicule selon la revendication 7 ou 8, **caractérisé en ce que** les fibres courtes présentent une longueur de 1,00 mm à 4,00 mm, de préférence de 1,50 mm à 3,00 mm.

10. Pneumatique pour véhicule selon l'une des revendications 1 à 9, **caractérisé en ce que**, dans la bande de roulement (3), les fibres (7, 7') contenues dans une rangée de blocs profilés (9) ou une nervure profilée dans des éléments structurels profilés successifs sont inclinées alternativement dans l'un et l'autre sens circonférentiel (U_{L1}, U_{L2}).

11. Pneumatique pour véhicule selon l'une des revendications 1 à 9, **caractérisé en ce que**, dans la bande de roulement, dans au moins une rangée de blocs profilés ou une nervure profilée, les fibres situées dans leurs éléments structurels profilés sont toutes, c'est-à-dire sur toute la périphérie de la bande de roulement, inclinées selon les mêmes angles dans un sens circonférentiel défini et par rapport à la direction radiale et, dans au moins une autre rangée de blocs profilés ou nervure profilée, les fibres situées dans leurs éléments structurels profilés sont également toutes inclinées selon les mêmes angles dans l'autre sens circonférentiel et par rapport à la direction radiale.

12. Pneumatique pour véhicule selon l'une des revendications 1 à 11, **caractérisé en ce que** les fibres (6, 6', 7, 7') présentent un diamètre de 0,20 mm à 1,00 mm, en particulier de 0,30 mm à 0,80 mm, de préférence de 0,40 mm à 0,60 mm.

13. Pneumatique pour véhicule selon l'une des revendications 1 à 12, **caractérisé en ce que** les fibres (6, 6', 7, 7') sont des fibres de carbone, des fibres de verre ou des fibres de polyamide.

14. Pneumatique pour véhicule selon l'une des revendications 1 à 13, **caractérisé en ce que** la proportion de fibres (6, 6', 7, 7') dans le matériau de caoutchouc respectif est de 1 pcc à 10 pcc, en particulier de 1,5 pcc à 8 pcc, de préférence de 2 pcc à 5 pcc.
